# EUROPEAN PATENT APPLICATION

(11) **EP 0 595 639 A2**
(43) Date of publication of application: **04.05.1994**
(21) Application number: 93308639.9
(22) Date of filing: 29.10.1993
(51) Int. Cl.: G11B 11/10

(54) **Magnetooptical recording medium and method of recording data thereon**

(30) Priority: 30.10.1992 JP 292348/92; 17.11.1992 JP 307075/92; 15.10.1993 JP 258497/93
(71) Applicant: CANON KABUSHIKI KAISHA, Tokyo (JP)
(72) Inventor: Hongu, Kazuoki, c/o Canon K. K., Ohta-Ku, Tokyo (JP); Nishimura, Naoki, c/o Canon K. K., Ohta-Ku, Tokyo (JP); Ikeda, Takashi, c/o Canon K. K., Ohta-Ku, Tokyo (JP); Okada, Takeshi, c/o Canon K. K., Ohta-Ku, Tokyo (JP)
(74) Representative: Beresford, Keith Denis Lewis

(57) **Abstract**

A magnetooptical recording medium includes a substrate (1), a first magnetic layer (3) formed on the substrate and having an easy axis of magnetization in a direction perpendicular to a layer surface, a second magnetic layer (4) having a lower Curie temperature and a larger coercive force at room temperature than the first magnetic layer and exchange-coupled to the first magnetic layer, and a reflective layer (6) formed on a side opposite to the substrate with respect to the first and second magnetic layers. When the recording medium is evaluated by performing a process of recording a signal on the recording medium by scanning the recording medium with a light beam modulated according to the signal while applying a DC magnetic field on the recording medium, reproducing the recorded signal by utilizing the magnetooptic effect, and detecting a CN ratio and noise level of the reproduced signal, while changing a direction and intensity of the DC magnetic field, an intensity of the DC magnetic field in a first direction in which the CN ratio is 0 is 75 to 230 Oe, an intensity of the DC magnetic field in a second direction in which the CN ratio is saturated and which is opposite to the first direction is 20 to 180 Oe, and a difference between a noise level at which the CN ratio is 0 and a maximum noise level is not more than 10 dB.

## Description

### BACKGROUND OF THE INVENTION

### Field of the Invention

The present invention relates to a magnetooptical recording medium on/from which information is recorded/reproduced by a light beam using a magneto-optic effect and, more particularly, to a magnetooptical recording medium allowing proper magnetic field modulation recording even in a low-intensity external magnetic field, and a method of recording data on the medium.

### Related Background Art

Recently, as a recording medium based on a writable high-density recording scheme, a magnetooptical recording medium has attracted a great deal of attention. According to the recording scheme using this recording medium, information is recorded by writing a magnetic domain on a thin magnetic film by using thermal energy such as a semiconductor laser beam, and this information is read by using a magneto-optic effect.

Typical magnetic materials used for this magneto-optic recording scheme are amorphous alloy films formed of mixtures of rare-earth elements, e.g., Gd, Tb, and Dy, and iron group transition metals, e.g., Fe and Co.

It is difficult to find a single magnetic material for a magnetooptical recording medium, which has a low Curie temperature to allow easy recording, a large coercive force to ensure data retention safety, and a large magneto-optic Kerr rotation angle to ensure good read characteristics. For this reason, Japanese Laid-Open Patent Application No. 57-78652 proposes a magnetooptical recording medium formed by stacking two different magnetic materials which have necessary functions independently.

As a medium having excellent information stability, a medium using a rare-earth/iron group amorphous alloy as a large-coercive-force layer, which has a compensation temperature between room temperature and the Curie temperature, has been proposed. In recent years, the CAV scheme (constant rotational speed) has been used as a recording scheme for a magneto-optic disk having a large capacity. In this scheme, the recording mark length at the inner periphery of a disk is different from that on the outer periphery. Demand has arisen for a recording medium having a higher capacity. As a recording scheme suitable for this demand, the M-CAV (Modified CAV) scheme is available. In this scheme, recording is performed with a constant mark length. That is, in the scheme, the recording frequency is changed between the inner and outer peripheries of a disk, at which linear velocities are different. A pit edge recording scheme has also been proposed, in which information of "0" and information of "1" are caused to correspond to end portions of recorded pits.

For use in the M-CAV scheme, the thickness of a magnetic layer may be reduced. If, however, a magnetic layer is formed thin, a magneto-optic signal decreases in level. In order to prevent this, in some method, a reflective film is formed on a recording medium to increase the Kerr rotation angle. Such a magnetooptical recording medium is disclosed in Japanese Laid-Open Patent Application No. 60-25036. This magnetooptical recording medium uses an exchange-coupled two-layered film having a reflective film structure.

For the above-mentioned magnetooptical recording medium, an optical modulation scheme and a magnetic field modulation scheme may be used. In the optical modulation scheme, a weak external DC magnetic field is always applied to the recording medium, and a laser beam is radiated thereon in accordance with the presence/absence of a signal. In the magnetic field modulation scheme, a laser beam having a constant intensity is always radiated on the recording medium, and an external magnetic field is reversed in accordance with the presence/absence of a signal. The studies of the optical modulation scheme have started long before because it allows a relatively simple apparatus arrangement. However, re-recording cannot be performed on a portion where information has already been recorded. That is, an overwrite operation cannot be performed. In order to write new information, an erasing operation must be performed to align the directions of magnetization in a predetermined direction. Therefore, the write speed decreases accordingly.

According to the magnetic field modulation scheme, although the apparatus arrangement is slightly complicated, an overwrite operation can be performed, and a recording operation can be performed as fast as that for a computer hard disk. For this reason, the scheme is considered very promising in terms of practical applications and hence is being developed.

When high-density recording is to be performed by the magnetic field modulation scheme, a high-frequency magnet capable of reversing a magnetic field at a very high speed is used as a means for applying an external magnetic field. It is, however, difficult to generate a high-intensity external magnetic field by using such a magnet. In the magnetic field modulation scheme, a magnetic field need not be narrowed down, unlike a magnetic recording scheme. For this reason, the spacing between the medium surface and the magnet can be set to be 10 times or more that in the magnetic recording scheme. In the magnetic field modulation scheme, however, an effective external magnetic field weakens.

Assume that a magnetooptical recording medium which has been mainly developed for the optical modulation scheme is to be directly applied to the magnetic field modulation scheme. In this case, since the recording medium exhibits insufficient recording/reproducing characteristics in a low external magnetic field, the recording medium is not practical.

In order to solve this problem, it is required that reversal of magnetization of a magnetooptical recording medium be easily caused in a low external magnetic field. In addition, in the pit edge recording scheme designed to realize an increase in capacity, it is required that an edge shift be small. This is because variations in edge position (edge shift) in the write mode cause a deterioration in jitter characteristics, resulting in an increase in error rate.

### SUMMARY OF THE INVENTION

It is an object of the present invention to solve the problems in the conventional techniques and provide a magnetooptical recording medium for magnetic field recording, which can exhibit good recording/reproducing characteristics even in a low external magnetic field, and a method of recording data thereon.

In order to achieve the above object, according to the present invention, there is provided a magnetooptical recording medium comprising a substrate, a first magnetic layer formed on the substrate and having an easy axis of magnetization in a direction perpendicular to a layer surface, a second magnetic layer having a lower Curie temperature and a larger coercive force at room temperature than the first magnetic layer and exchange-coupled to the first magnetic layer, and a reflective layer formed on a side opposite to the substrate with respect to the first and second magnetic layers, characterized in that when the recording medium is evaluated by performing a process of recording a signal on the recording medium by scanning the recording medium by a light beam modulated in accordance with the signal while applying a DC magnetic field on the recording medium, reproducing the recorded signal by using a magneto-optic effect, and detecting a CN ratio and noise level of the reproduced signal, while changing a direction and intensity of the DC magnetic field, an intensity of the DC magnetic field in a first direction in which the CN ratio is 0 is 75 to 230 Oe, an intensity of the DC magnetic field in a second direction in which the CN ratio is saturated and which is opposite to the first direction is 20 to 180 Oe, and a difference between a noise level at which the CN ratio is 0 and a maximum noise level is not more than 10 dB.

In the present invention, data is recorded on the above mentioned magnetooptical recording medium with a light beam having a constant intensity and applying a magnetic field modulated according to the data thereto at the same time.

### BRIEF DESCRIPTION OF THE DRAWINGS

Fig. 1 is a sectional view illustrating a magnetooptical recording medium according to the first embodiment of the present invention;
Fig. 2 is a sectional view illustrating a magnetooptical recording medium according to the second embodiment of the present invention;
Fig. 3 is a schematic view showing an arrangement of an evaluating unit used for evaluation of the magnetooptical recording medium of the present invention;
Fig. 4 is a graph showing the relationship between the external magnetic field intensity and the CN ratio in a case wherein the magnetooptical recording medium of the present invention is evaluated;
Fig. 5 is a graph showing the relationship between the external magnetic field intensity and the noise level in a case wherein the magnetooptical recording medium of the present invention is evaluated; and
Fig. 6 is a schematic view showing an arrangement of a magneto-optic recording/reproducing apparatus for recording/reproducing information on/from the magnetooptical recording medium of the present invention.

### DETAILED DESCRIPTION OF THE PREFERRED EMBODIMENTS

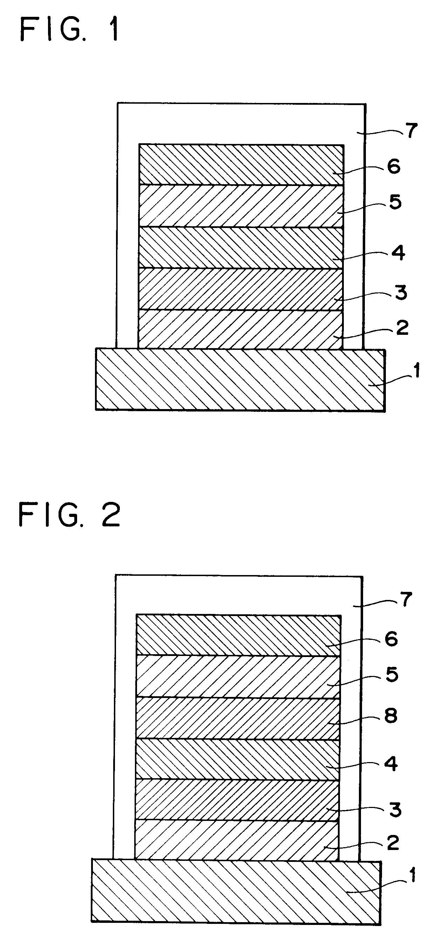

Fig. 1 is a sectional view illustrating the arrangement of a magnetooptical recording medium according to the first embodiment of the present invention. Referring to Fig. 1, an optically transparent substrate 1 consists of a glass or plastic material. A first inorganic dielectric layer 2 consisting of an inorganic dielectric material such as SiNx is formed on the substrate 1 to obtain an interference effect and an anticorrosion effect. A first magnetic layer 3 and a second magnetic layer 4 having a larger coercive force and a lower Curie temperature than the first magnetic layer 3 are formed on the first inorganic dielectric layer 2. In addition, a second inorganic dielectric layer 5 as a dielectric layer consisting of SiNx or the like for preventing corrosion of the magnetic layers and obtaining an interference effect, and a reflective metal layer 6 are formed on the second magnetic layer 4. It is preferable that these films be formed continuously while maintaining a vacuum. Thereafter, a protective coat 7 consisting of an ultraviolet curing resin or the like is formed on the resultant structure. As a material for the substrate 1, polycarbonate, PMMA, glass 2P (a substrate obtained by forming a photo-setting resin layer having recesses/projections such as grooves or pits on a glass substrate by photo-polymerization), or the like may be used.

The first and second inorganic dielectric layers are formed to improve the corrosion resistance and to increase the Kerr rotation angle by utilizing multiple reflection. As a material for these layers, SiN, SiO, SiC, or the like is used. In addition, the reflective layer is formed to reflect a laser beam transmitted through the magnetic layers and the dielectric layers so as to synergetically combine the Farady effect and the Kerr effect, thereby increasing the Kerr rotation angle. In general, as a material for this reflective layer, a metal such as Al, Cu, or Ag is used.

In the magnetooptical recording medium of the present invention, a recording auxiliary layer for improving the magnetic field sensitivity may be formed to be adjacent to the second magnetic layer. Fig. 2 is a sectional view illustrating an arrangement of a magnetooptical recording medium having a recording auxiliary layer. The magnetooptical recording medium shown in Fig. 2 is different from that shown in Fig. 1 in that a recording auxiliary layer 8 is inserted between a second magnetic layer 4 and a second inorganic dielectric layer 5. The recording auxiliary layer 8 is a magnetic layer having an easy axis of magnetization which is perpendicular to the layer surface. The Curie temperature of the recording auxiliary layer 8 is higher than that of the second magnetic layer 4. In this magnetooptical recording medium, a substrate 1, a first inorganic dielectric layer 2, a first magnetic layer 3, the second magnetic layer 4, the second inorganic dielectric layer 5, a reflective layer 6, and a protective coat 7 are arranged in the same manner as in the magnetooptical recording medium shown in Fig. 1, and have the same compositions as those of the corresponding layers thereof.

As a magnetic material for the first magnetic layer, an alloy mainly consisting of Gd as a rare-earth element, and Fe and/or Co as iron group transition metals, e.g., Gd-Fe, Gd-Fe-Co, or Gd-Ne-Fe-Co, which has a high Curie temperature and a small coercive force at room temperature, is preferably used. In order to improve the corrosion resistance, an element such as Cr, Al, Ti, or Ta may be added to such a magnetic material.

As a magnetic material for the second magnetic layer, an alloy mainly consisting of Tb and/or Dy as rare-earth elements, and Fe and/or Co as iron group transition metals, e.g., Tb-Fe, Tb-Fe-Co, Dy-Fe-Co, or Tb-Dy-Fe-Co, which has a low Curie temperature and a large coercive force at room temperature, is preferably used. In order to improve the corrosion resistance, an element such as Cr, Ti, or Ta may be added to such a magnetic material. The second magnetic layer has a larger coercive force than the first magnetic layer, and vertical magnetic anisotropy. The second magnetic layer is magnetically coupled to the first magnetic layer by exchange coupling. The first and second magnetic layers are formed on the substrate by a vacuum film formation technique such as sputtering. Note that either the first magnetic layer or the second magnetic layer may be formed first with respect to the incident direction of light.

Any write methods other than the method using a light beam can be applied to such a magnetooptical recording medium as long as they can supply energy required to produce reversed magnetic domains by using a stylus type magnetic head, a thermal pen, and the like.

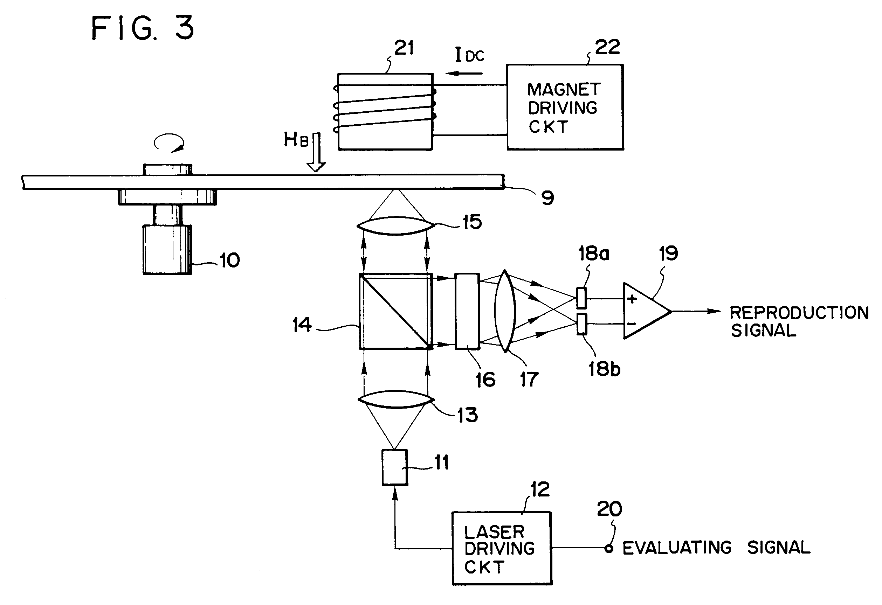

The magnetooptical recording medium of the present invention is evaluated by an evaluation method based on an optical modulation scheme, in which a weak external DC magnetic field is kept applied to the recording medium, and a laser beam is modulated and radiated thereon in accordance with the presence/absence of a signal. Fig. 3 shows an arrangement of an evaluating unit used for such evaluation. Referring to Fig. 3, a magneto-optic disk 9 has the structure shown in Fig. 1 or 2. In this magneto-optic disk 9, alignment of the directions of magnetization of the first and second magnetic layers in a predetermined direction, i.e., initialization, is performed in advance. The magneto-optic disk 9 is rotated by a spindle motor 10 and is scanned by a laser beam emitted from a semiconductor laser 11. The semiconductor laser 11 is driven by a laser driving circuit 12 to emit a light beam which is intensity-modulated in accordance with an evaluating signal having a predetermined frequency. The evaluating signal is input from a terminal 20.

The light beam emitted from the semiconductor laser 11 is collimated by a collimator lens 13 and is transmitted through a polarizing beam splitter 14 to be focused on the magneto-optic disk 9 by an objective lens 15. At the same time, a DC magnetic field is applied from an electromagnet 21 onto a light beam radiation portion of the magneto-optic disk 9. A magnet driving circuit 22 controls the direction and intensity of the DC magnetic field applied from the electromagnet 21 onto the magneto-optic disk 9. The evaluating signal is recorded on the magneto-optic disk 9 by this DC magnetic field and the modulated light beam.

The evaluating signal recorded on the magneto-optic disk 9 is reproduced by using a magneto-optic effect. In the reproduction mode, the semiconductor laser 11 emits a linearly polarized light beam which has an intensity lower than that in the recording mode and is not modulated. The portion, of the magneto-optic disk 9, on which the evaluating signal is recorded is scanned by this light beam. In the reproduction mode, the electromagnet 21 is not driven. The polarized state of the light beam reflected by the magneto-optic disk 9 is modulated by the magneto-optic effect in accordance with the recorded evaluating signal. The light beam reflected by the magneto-optic disk 9 is separated from the incident light by the polarizing beam splitter 14 and is split into two light beams polarized in directions perpendicular to each other by an analyzer means 16 such as a Wollaston prism. These light beams, which are polarization-state-modulated, are converted into intensity-modulated light beams by the analyzer means 16. The light beams are then focused by a sensor lens 17 and are received by photodetectors 18a and 18b, respectively. The light beams are converted into electrical signals which are output. The output signals from the photodetectors 18a and 18b are differentially amplified by a differential amplifier 19 to reproduce the evaluating signal. The CN (carrier-noise) ratio and noise level of the reproduction signal output from the differential amplifier 19 are measured.

The magneto-optic disk is evaluated by using the evaluating unit shown in Fig. 3 in the following procedure. First, an evaluating signal is recorded on the magneto-optic disk 9 by scanning the magneto-optic disk 9 with a light beam modulated in accordance with the evaluating signal while causing the electromagnet 21 to apply a DC magnetic field having a certain intensity onto the magneto-optic disk 9 in the erasing direction, i.e., the indirection in which the directions of magnetization are initialized, or the recording direction, i.e., the direction opposite to the direction in which the directions of magnetization are initialized. The recorded signal is then reproduced, and the CN ratio and noise level of the reproduction signal are measured. Subsequently, the magnetic field intensity is set to several different values, and recording and reproduction of signals are performed, in the same manner as described above, at the respective values. The CN ratios and noise levels of the resultant reproduction signals are then measured. In addition, the direction of the DC magnetic field is reversed, and the magnetic field intensity is changed to several values. Recording and reproduction of signals are performed, in the same manner as described above, at the respective values. The CN ratios and noise levels of the resultant reproduction signals are measured.

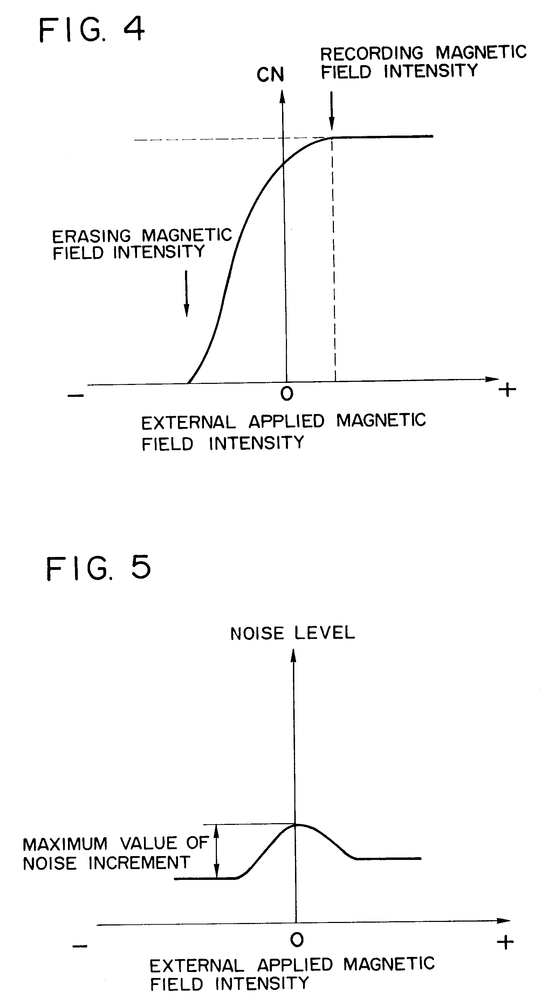

The evaluation results are shown in Figs. 4 and 5. Referring to Figs. 4 and 5, the abscissa indicates the intensity or strength of a magnetic field externally applied to the magneto-optic disk. In these graphs, the directions indicated by the signs "-" and "+" correspond to the erasing and recording directions, respectively. The ordinate in Fig. 4 indicates the CN ratios measured when the signals recorded at the respective magnetic intensities are reproduced. The ordinate in Fig. 5 indicates the noise levels measured when the signals recorded at the respective magnetic intensities are reproduced.

Referring to Fig. 4, the magnetic field intensity, in the erasing direction, at which the CN ratio becomes O is defined as an erasing magnetic filed intensity, and the magnetic field, in the recording direction, at which the CN ratio is saturated is defined as a recording magnetic field intensity. The magnetooptical recording medium of the present invention is characterized in that the erasing magnetic field intensity falls within the range of 75 to 230 Oe and the recording magnetic field intensity falls within the range of 20 to 180 Oe. In addition, referring to Fig. 5, the magnetooptical recording medium of the present invention is characterized in that the difference between the noise level corresponding to a CN ratio of 0 and the maximum noise level, i.e., the maximum value of noise increment from the noise level at the erasing magnetic field intensity, is set to be 10 dB or less. A magnetooptical recording medium which can satisfy these conditions can be formed by adjusting the Curie temperature, saturation magnetization, and thickness of the first magnetic layer, and those of the second magnetic layer. When a recording auxiliary layer is formed, its saturation magnetization, thickness, and Curie temperature may be adjusted instead.

If the thickness of the first magnetic layer is smaller than 50 Å, stability of the magnetic characteristics of the magnetic layer may deteriorate, or intended magnetic characteristics may no be obtained owing to variations in the manufacturing process. For this reason, the first magnetic layer preferably has a thickness of 50 Å or more. If the thickness of the second magnetic layer is smaller than 200 Å, the CN ratio is decreased because of an increase in recording noise. For this reason, the second magnetic layer preferably has a thickness of 200 Å or more. The thickness of a recording auxiliary layer is preferably set to be 20 Å or more. In consideration of recording sensitivity and linear velocity dependency, the sum of the thicknesses of the first and second magnetic layers is preferably set to be 300 Å to 500 Å. Furthermore, when a recording auxiliary layer is formed, the sum of the thicknesses of the first and second magnetic layers and the recording auxiliary layer is preferably set to be 320 Å to 520 Å in consideration of recording sensitivity and linear velocity dependency.

Since the coercive force of the first magnetic layer is small, the minimum stable magnetic domain size is large. For this reason, if the thickness of the first magnetic layer is larger than that of the second magnetic layer, small bits cannot be stably recorded and retained on the submicron order. In order to stably record and retain bits on the submicron order, the thickness of the second magnetic layer having a larger coercive force is set to be larger than that of the first magnetic layer. The percentage of the thickness of the first magnetic layer to that of the second magnetic layer is preferably 25 to 50%.

If the erasing magnetic field intensity falls outside the range of 75 to 230 Oe, the recording magnetic field intensity falls outside the range of 20 to 180 Oe, or the maximum value of noise increment is larger than 10 dB, a desired reduction in external magnetic field intensity cannot be achieved.

As is apparent, in a measuring device used to measure the dependencies of the carrier level (C) and noise level (N) on the erasing magnetic field, recording magnetic field, and external magnetic field in magnetic field modulation recording, leakage magnetic fields from the actuator and the like of the device to a recording medium must be minimized.

The following are factors which influence bit formation in the magnetic field modulation recording: an external magnetic field, a demagnetizing field in a recording operation, a stray magnetic field, Bloch wall energy, the coercive force of a magnetic film, magnetization, and the like. Bits are stably formed when a good balance is achieved between Zeeman energy, static magnetic energy, anisotropic energy, magnetic domain wall energy, coercive force energy, and the like with which the above-mentioned factors are associated. These energies change depending on the material, thickness, and saturation magnetization of a magnetic film. In addition, since magneto-optic recording is equivalent to thermal magnetic recording, magnetic domain wall energy, coercive force, and magnetization have spatial distributions owing to the presence of a temperature distribution. Therefore, the bit formation process is complicated and is not fully understood.

In the magnetooptical recording medium with the exchange-coupled two-layered magnetic film according to the present invention, the above-mentioned factors are factors which determine the external magnetic field intensity. In general, in formation of bits, if a stray magnetic field is present around the bits and acts in the recording direction, the apparent external magnetic field intensity is increased in accordance with the magnitude of the stray magnetic field. In this case, the Zeeman energy increases, and hence the size of each recorded bit increases. That is, edge shift occurs. In order to reduce the jitter by setting a constant edge interval in the magnetic field modulation recording mode, recorded bits need to have the same size. For this purpose, the stray magnetic field acting in the recording direction is reduced. The stray magnetic field intensity is proportional to the product of the saturation magnetization and thickness of a magnetic layer, i.e., the magnitude of magnetic moment, and is a function of the distance from the magnetic moment. That is, the stray magnetic field intensity increases as the distance decreases. In general, the stray magnetic field intensity is expressed in an integral form in consideration of the influences of all the magnetic moments except for the moment at the position of interest. Therefore, in order to reduce a stray magnetic field from a low-temperature portion in a recording operation, the magnitude of saturation magnetization is reduced. The process of recording information on the recording medium of the present invention will be described below.

A Curie point T_{c1} of the first magnetic layer is set to be higher than a Curie point T_{c2} of the second magnetic layer. When a laser beam is radiated on the magnetic layers, and the medium temperature exceeds the Curie point T_{c1}, the magnetizations of the first and second magnetic layers disappear. When the recording medium is cooled, and a medium temperature T becomes lower than the Curie point T_{c1}, magnetization appears in the first magnetic layer. At this time, even if a given small area of the first magnetic layer is magnetized in a direction opposite to that of the external magnetic field, since the coercive force of the first magnetic layer is small, the small magnetized area is unstable, and the minimum stable magnetic domain size is large.

For this reason, the small magnetized area disappears. Since the Curie temperature of the first magnetic layer is high, the recording medium is influenced by a stray magnetic field due to magnetization in a cooling operation. Therefore, in a magnetic field having a considerably low intensity, the balance of magnetic energy is adversely influenced by variations in film thickness, and uniform bits may not be formed. The minimum external magnetic field intensity has its own limit. As is apparent from this, the magnitude of magnetization near the Curie temperature of the first magnetic layer is important and influences the magnitude of a stray magnetic field. The larger the magnitude of magnetization, the better. If the Curie temperature of the first magnetic layer is high, the magnitude of saturation magnetization near the temperature in the recording mode becomes considerably larger than that at room temperature, and the stray magnetic field intensity is high. Therefore, the Curie temperature of the first magnetic layer is preferably 300°C or less. If, however, the difference between the Curie temperature of the first magnetic layer and that of the second magnetic layer is smaller than 60°C, since uniform recording areas are not formed on the first magnetic layer, a reduction in external magnetic field intensity cannot be achieved. Assume that Cr is added to the material for the first magnetic layer to improve the corrosion resistance. In this case, since the Curie temperature decreases, Co is added to the material to compensate for the decrease in Curie temperature. Assume that a large amount of Cr is added to the material. In this case, even if Co is added to compensate the Curie temperature, the anisotropy deteriorates and hence the Kerr rotation angle decreases. This limits the amount of Cr to be added. The addition amount is preferably set to be 2 to 5 atomic%. Even if the amount of Co in a transition metal remains the same, the Curie temperature changes depending on the saturation magnetization, i.e., composition, of a layer. When the layer becomes rare-earth metal sub-lattice magnetization rich, and the amount of the transition metal decreases, the Curie temperature decreases.

If, for example, Gd-Fe-Co is used for the first magnetic layer, accurate measurement is difficult to perform, because the Curie temperature of Gd-Fe-Co is high. In general, the Curie temperature of Gd-Fe is about 220°C. If part of Fe is substituted with Co, the Curie temperature increases by about 6°C per atomic% of Co.

A recording area of the first magnetic layer is determined by an area in which the medium temperature T is higher than the Curie point T_{c2} and exchange coupling with the second magnetic layer is lost. At the boundary of this area, since the anisotropy of the second magnetic layer is large, the minimum stable magnetic domain size is small. For this reason, the boundary of the reversal area is clear and has a shape faithfully reflecting the temperature distribution. However, in forming a recording area on the first magnetic layer, if a high-intensity stray magnetic field other than the external magnetic field from the magnetic layer acts in the recording direction, the recording bit size is increased, as described above. As a result, edge shift occurs. In order to reduce the edge shift, the saturation magnetization is reduced to reduce the stray magnetic fields. In the recording mode, stray magnetic fields are mainly generated by the thick second magnetic layer.

If thin magnetic layers are formed as in the present invention, since the magnitude of exchange coupling is larger, the direction of magnetization of the first magnetic layer cannot be set to be opposite to that of magnetization of the second magnetic layer. That is, the two layers have the same direction of magnetization, and hence magnetization reversal of the first and second magnetic layers occurs at the same time. Therefore, stray magnetic fields cannot be reduced by the method of exchange-coupling the two layers to have opposite directions of magnetization.

For the above-described reasons, it is preferable that the saturation magnetization of the second magnetic layer be rare-earth sub-lattice magnetization rich and have 100 emu/cc or less.

When the recording medium is further cooled, and the medium temperature T becomes lower than the Curie point T_{c2}, magnetization appears in the second magnetic layer. The direction of this magnetization is a direction in which iron group spins align in the same direction, owing to exchange coupling with the first magnetic layer. As is apparent, this process starts from the outer peripheries of bits at which the temperature quickly drops. As described above, since uniform recorded bits having no microdomains have already been formed in the first magnetic layer, the bit pattern of the first magnetic layer is transferred onto the second magnetic layer by the exchange coupling force. The Curie temperature of the second magnetic layer is set in accordance with the laser power used, the reflectance of the medium, the linear velocity, the bit length, and the like. In a magnetooptical recording medium having a reflective film arrangement, the reproduction signal intensity is mainly determined by the Kerr rotation angle of each magnetic layer. In general, when the amount of Co of a magnetic layer is 30 atomic% or less, the Kerr rotation angle of the magnetic layer is uniquely determined by the Curie temperature. Therefore, the higher the Curie temperature of a magnetic layer, the better the reproduction characteristics. That is, the second magnetic layer preferably has a high Curie temperature. In consideration of recording sensitivity, overwrite characteristics, repetitive recording/reproducing characteristics, and the like, the Curie temperature of the second magnetic layer is preferably set to be 170 to 200°C.

With this magnetic layer, a reduction in external magnetic field intensity is achieved, and uniform bits free from recording noise can be formed, thus enabling proper magnetic field modulation recording.

The same applies to a case wherein a recording auxiliary layer having a higher Curie temperature than the second magnetic layer is formed.

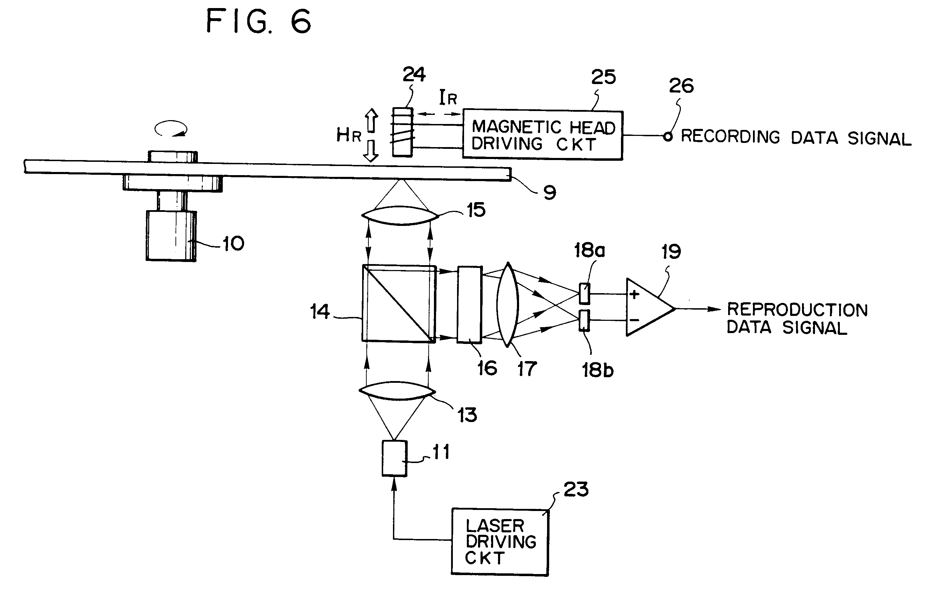

The magnetooptical recording medium of the present invention can be suitably used by a recording/reproducing apparatus of the magnetic field modulation scheme. Fig. 6 shows an arrangement of such a magneto-optic recording/reproducing apparatus. The same reference numerals in Fig. 6 denote the same parts as in Fig. 3, and a detailed description thereof will be omitted. Referring to Fig. 6, a magneto-optic disk 9 is scanned by a light beam emitted from a semiconductor laser 11. The semiconductor laser 11 is driven by a laser driving circuit 23 to emit a light beam having a constant intensity large enough to heat the first and second magnetic layers to a temperature near their Curie temperatures. At the same time, a modulated magnetic field is applied from a magnetic head 24 onto a light beam radiation portion of the magneto-optic disk 9. The magnetic head 24 is driven by a magnetic head driving circuit 25. The magnetic head driving circuit 25 supplies an AC current I_{R} to the magnetic head 24. The direction of the AC current I_{R} is reversed in accordance with a recording data signal input from a terminal 26. The magnetic head 24 generates a modulated magnetic field H_{R}, whose direction is reversed in accordance with recording data, upon reception of this current. The recording data is recorded on the magneto-optic disk 9 by the modulated magnetic field H_{R} and the non-modulated light beam.

The data recorded on the magneto-optic disk 9 is reproduced by using the magneto-optic effect. In the reproduction mode, the semiconductor laser 11 emits linearly polarized light beam which has an intensity lower than that in the recording mode and is not modulated. The portion, of the magneto-optic disk 9, on which the data is recorded is then scanned by this light beam. In the reproduction mode, the magnetic head 24 is not driven. The polarized state of the light beam reflected by the magneto-optic disk 9 is modulated by the magneto-optic effect in accordance with the recorded data. The light reflected by the magneto-optic disk 9 is separated from the incident light by a polarizing beam splitter 14 and is split into two light beams polarized in directions perpendicular to each other by a analyzer means 16 such as a Wollaston prism. These light beams, which are polarization-state-modulated, are converted into intensity-modulated light beams by the analyzer means 16. The light beams are then focused by a sensor lens 17 and are received by photodetectors 18a and 18b. The light beams are converted into electrical signals which are output. The output signals from the photodetectors 18a and 18b are differentially amplified by a differential amplifier 19, thus reproducing the data.

Examples of the present invention will be described below.

### Example 1-1

A 1,000-Å thick SiN layer as the first inorganic dielectric layer was formed on a polycarbonate substrate having a diameter of 130 mm and pre-grooves by using a magnetron sputter unit to obtain anti-oxidation and interference effects. A transition metal sub-lattice magnetization rich Gd(Fe₉₃Co₇) layer (saturation magnetization Ms = 200 emu/cc) having a thickness of 100 Å was then formed as the first magnetic layer. A transition metal sub-lattice magnetization rich Tb(Fe₉₂Co₈) layer (Curie temperature = 170°C; saturation magnetization Ms = 200 emu/cc) having a thickness of 200 Å as the second magnetic layer was formed on the first magnetic layer. Thereafter, in order to improve the anti-oxidation and interference effects, a 300-Å thick SiN layer as the second inorganic dielectric layer was formed. A 500-Å thick Al film as a reflective layer was formed on the second inorganic dielectric layer. These layers were sequentially so as to maintain a vacuum. Thereafter, an ultraviolet curing resin as a protective coat was coated on the Al film to have a thickness of 10 µm. With this process, a magnetooptical recording medium of the present invention was manufactured. This medium was evaluated by the optical modulation scheme, and the maximum values of erasing magnetic field intensity, recording magnetic field intensity, and noise increment were measured. In addition, data was recorded/reproduced on/from the medium by the magnetic field modulation scheme, and the magnetic field intensity at which the CN ratio became 49dB was measured. The measurement results and measurement conditions are shown in Tables 1 and 2.

### Examples 1-2 to 1-7

As shown in Tables 1 and 2, a magnetooptical recording medium of the present invention was prepared to have the same arrangement as that of Example 1-1 by using the same materials as those used in Example 1-1 except that the compositions of the first magnetic layer Gd-Fe-Co and the second magnetic layer Tb-Fe-Co in the first embodiment were changed. These recording media were evaluated by the optical modulation scheme, and the maximum values of the erasing magnetic field intensity, recording magnetic field intensity, and noise increment of each medium were measured. In addition, data was recorded/reproduced on/from each medium by the magnetic field modulation scheme, and the magnetic field intensity at which the CN ratio became 49dB was measured. The measurement results and measurement conditions are shown in Tables 1 and 2.

### Comparative Examples 1-1 to 1-14

As shown in Tables 1 and 2, a magnetooptical recording medium of the present invention was prepared to have the same arrangement as that of Example 1-1 by using the same materials as those used in Example 1-1 except that the compositions of the first magnetic layer Gd-Fe-Co and the second magnetic layer Tb-Fe-Co in the first embodiment were changed. These recording media were evaluated by the optical modulation scheme, and the maximum values of the erasing magnetic field intensity, recording magnetic field intensity, and noise increment of each medium were measured. In addition, data was recorded/reproduced on/from each medium by the magnetic field modulation scheme, and the magnetic field intensity at which the CN ratio became 49dB was measured. The measurement results and measurement conditions are shown in Tables 1 and 2.

**Table 1**

| | Erasing Magnetic Field Intensity (Oe) | Recording Magnetic Field Intensity (Oe) | Noise Increment (dB) | Magnetic Field Intensity at which CN Ratio is 49 dB | Edge Shift |
|---|---|---|---|---|---|
| Example 1-1 | -230 | 50 | 7.3 | 78 | 8.1 |
| Example 1-2 | -180 | 180 | 6.7 | 81 | 2.2 |
| Example 1-3 | -200 | 121 | 7.8 | 89 | 3.8 |
| Example 1-4 | -226 | 121 | 4.1 | 98 | 4.2 |
| Example 1-5 | - 75 | 180 | 6.7 | 100 | 2.3 |
| Example 1-6 | -200 | 20 | 10.0 | 100 | - |
| Example 1-7 | -200 | 40 | 10.0 | 100 | - |
| Comparative Example 1-1 | -310 | 90 | 5.5 | 115 | - |
| Comparative Example 1-2 | - 90 | 200 | 7.8 | 116 | 3.8 |
| Comparative Example 1-3 | -300 | 90 | 7.3 | 120 | - |
| Comparative Example 1-4 | -145 | 65 | 12.7 | 130 | 8.9 |
| Comparative Example 1-5 | - 25 | 280 | 6.7 | 142 | 2.3 |
| Comparative Example 1-6 | -170 | 110 | 11.3 | 147 | 9.4 |
| Comparative Example 1-7 | -400 | 200 | 4.5 | 147 | - |
| Comparative Example 1-8 | -300 | 300 | 8.3 | 152 | 2.2 |
| Comparative Example 1-9 | -140 | 150 | 11.1 | 173 | 9.4 |
| Comparative Example 1-10 | -400 | 300 | 5.5 | 190 | 4.0 |
| Comparative Example 1-11 | -145 | 20 | 11.4 | 195 | - |
| Comparative Example 1-12 | 0 | 480 | 8.9 | 234 | 3.0 |
| Comparative Example 1-13 | -700 | 400 | 4.0 | 350 | - |
| Comparative Example 1-14 | -600 or less | 400 or more | 5.0 | 350 | - |

**Table 2**

| | Saturation Magnetization of First Magnetic Layer (emu/cc) | Saturation Magnetization of Second Magnetic Layer (emu/cc) | Co/FeCo Amount (atomic%) |
|---|---|---|---|
| Example 1-1 | -200 | -200 | 7 |
| Example 1-2 | -250 | 50 | 7 |
| Example 1-3 | -200 | -50 | 7 |
| Example 1-4 | -250 | -50 | 7 |
| Example 1-5 | -200 | 50 | 7 |
| Example 1-6 | -150 | -200 | 15 |
| Example 1-7 | -150 | -200 | 7 |
| Comparative Example 1-1 | -200 | -200 | 15 |
| Comparative Example 1-2 | -150 | -50 | 7 |
| Comparative Example 1-3 | -150 | -200 | 30 |
| Comparative Example 1-4 | -100 | -200 | 30 |
| Comparative Example 1-5 | -150 | 50 | 7 |
| Comparative Example 1-6 | -100 | -200 | 7 |
| Comparative Example 1-7 | -200 | -200 | 30 |
| Comparative Example 1-8 | -230 | 50 | 30 |
| Comparative Example 1-9 | -130 | -250 | 30 |
| Comparative Example 1-10 | -230 | -50 | 30 |
| Comparative Example 1-11 | -100 | -200 | 15 |
| Comparative Example 1-12 | -130 | -50 | 30 |
| Comparative Example 1-13 | -230 | -250 | 30 |
| Comparative Example 1-14 | -150 | -200 | 0 |

In Table 2, the sign "-" added to the beginning of each saturation magnetization Ms indicates a transition metal sub-lattice magnetization superiority, and each magnetization saturation Ms without a sign indicates a rare-earth metal sub-lattice magnetization superiority.

The measurement conditions in the estimation based on the optical modulation scheme were: linear velocity = 9 m/sec, recording frequency = 5.8 MHz, recording laser power = 7.5 mW, reproduction laser power = 1.0 mW, numerical aperture (NA) of optical head = 0.55, and laser wavelength = 780 nm. The measurement conditions in the data recording/reproducing operations based on the magnetic field modulation scheme were: linear velocity 9 m/sec, recording frequency = 6.2 MHz, recording laser power = 8.5 mW, reproduction laser power = 1.0 mW, NA of optical head = 0.55, and laser wavelength = 780 nm

The edge shifts were measured under the following conditions and by the following method: linear velocity = 9 m/sec, recording laser power = 8.5 mW, reproduction laser power = 1.0 mW, NA of optical head = 0.55, and laser wavelength = 780 nm. Adjacent groove and land portions were set in two magnetized states, i.e., magnetized in the erasing direction (acting in the same direction as that of recording) and the recording direction (acting in the opposite direction to recording). In the respective states, recording was performed at a recording frequency of 1.55 MHz while the duty was changed. The pulse width on one side of a secondary harmonic wave with respect to the baseline was then measured. The pulse width difference of the one-side wave of the minimum second harmonic wave was defined as an edge shift amount.

### Example 2-1

A magnetooptical recording medium having the arrangement with the recording auxiliary layer shown in Fig. 2 was prepared. A 1,000-Å thick SiN layer as the first inorganic dielectric layer 2 for obtaining anti-oxidation and interference effects was deposited on a polycarbonate substrate having a diameter of 130 mm and pre-grooves by using a magnetron sputter unit to obtain anti-oxidation and interference effects. Subsequently, the following layers were sequentially formed while a vacuum was maintained: a 100-Å thick GdFeCo layer as the first magnetic layer 3, a 200-Å thick TbFeCo layer as the second magnetic layer 4, a 20-Å thick GdFeCo layer as the recording auxiliary layer 8, a 300-Å thick SiN layer as the second inorganic dielectric layer 5 for obtaining anti-oxidation and interference effects, and a 450-Å thick Al film as the reflective layer 6. Thereafter, a 10-µm thick ultraviolet curing resin layer 7 as a protective coat was formed on the surface of the Al film. With this process, a magnetooptical recording medium of the present invention was prepared. The compositions of the GdFeCo as the first magnetic layer 3 and the TbFeCo as the second magnetic layer 4 were set such that in the evaluation based on the optical modulation scheme, the erasing magnetic field intensity was 200 Oe and the recording magnetic field intensity was 100 Oe. Since GdFeCo, TbFeCo, and GdFeCo were respectively used as the first magnetic layer 3, the second magnetic layer 4, and the recording auxiliary layer 8, the second magnetic layer 4 has a higher coercive force than the first magnetic layer 3, and the first magnetic layer 3 has a higher Curie temperature than the second magnetic layer 4. In addition, the second magnetic layer has a higher coercive force than the recording auxiliary layer, and the recording auxiliary layer has a higher Curie temperature than the second magnetic layer.

Data was recorded/reproduced on/from this magnetooptical recording medium by the magnetic field modulation scheme in the same manner as in Example 1-1, and the magnetic field intensity at which the CN ratio became 49dB was measured. The thickness of each layer is shown in Table 3, and the measurement result is shown in Table 4.

### Example 2-2

A magnetooptical recording medium was prepared to have the same arrangement as that of Example 2-1 by using the same materials as those used in Example 2-1 except that the thickness of a GdFeCo layer as a recording auxiliary layer was set to be 100 Å. Data was recorded/reproduced on/from this magnetooptical recording medium by the magnetic field modulation scheme in the same manner as in Example 1-1, and the magnetic field intensity at which the CN ratio became 49dB was measured. The thickness of each layer is shown in Table 3, and the measurement result is shown in Table 4.

### Example 2-3

A magnetooptical recording medium was prepared to have the same arrangement as that of Example 2-2 by using the same materials as those used in Example 2-2 except that the thickness of a GdFeCo layer as the first magnetic layer was set to be 150 Å. Data was recorded/reproduced on/from this magnetooptical recording medium by the magnetic field modulation scheme in the same manner as in Example 1-1, and the magnetic field intensity at which the CN ratio became 49dB was measured. The thickness of each layer is shown in Table 3, and the measurement result is shown in Table 4.

### Example 2-4

A magnetooptical recording medium was prepared to have the same arrangement as that of Example 2-1 by using the same materials as those used in Example 2-1 except that the erasing magnetic field intensity used in the optical modulation scheme was set to be 100 Oe. Data was recorded/reproduced on/from this magnetooptical recording medium by the magnetic field modulation scheme in the same manner as in Example 1-1, and the magnetic field intensity at which the CN ratio became 49dB was measured. The thickness of each layer is shown in Table 3, and the measurement result is shown in Table 4.

### Example 2-5

A magnetooptical recording medium was prepared to have the same arrangement as that of Example 2-2 by using the same materials as those used in Example 2-2 except that the thickness of a recording auxiliary layer was set to be 300 Å. Data was recorded/reproduced on/from this magnetooptical recording medium by the magnetic field modulation scheme in the same manner as in Example 1-1, and the magnetic field intensity at which the CN ratio became 49dB was measured. The thickness of each layer is shown in Table 3, and the measurement result is shown in Table 4.

**Table 3**

| | Thickness of First Magnetic Layer (Å) | Thickness of Second Magnetic Layer (Å) | Thickness of Recording Assistance Layer (Å) |
|---|---|---|---|
| Example 2-1 | 100 | 200 | 20 |
| Example 2-2 | 100 | 200 | 100 |
| Example 2-3 | 150 | 200 | 100 |
| Example 2-4 | 100 | 200 | 20 |
| Example 2-5 | 100 | 200 | 300 |

**Table 4**

| | Erasing Magnetic Field Intensity (Oe) | Recording Magnetic Field Intensity (Oe) | Magnetic Field Intensity at Which CN Ratio Becomes 49 dB (Oe) |
|---|---|---|---|
| Example 2-1 | 200 | 100 | 85 |
| Example 2-2 | 200 | 100 | 90 |
| Example 2-3 | 200 | 130 | 95 |
| Example 2-4 | 100 | 100 | 90 |
| Example 2-5 | 200 | 150 | 100 |

As is apparent from Table 4, when a magnetooptical recording medium having a recording auxiliary layer was evaluated by the optical modulation scheme in which recording, reproducing, and erasing operations were performed thermomagnetically, it was found that proper recording/reproducing operations could be performed by the magnetic field modulation scheme even in an external magnetic field having a relatively low intensity of 100 Oe or less by setting the following conditions: erasing magnetic field intensity = 75 to 230 Oe, recording magnetic field intensity = 20 to 180 Oe, and maximum value of noise increment from noise level in erasing operation = 10 dB or less.

As has been described above, the magnetooptical recording medium of the present invention was scanned by a light beam modulated in accordance with a signal while a DC magnetic field was applied, thus recording the signal on the recording medium. The recorded signal was reproduced by using the magneto-optic effect, and the CN ratio and noise level of the reproduced signal were detected. When the magnetooptical recording medium was evaluated by performing the above-described process while changing the direction and intensity of the DC magnetic field, it was found that a proper recording operation based on the magnetic field modulation scheme could be performed even in an external magnetic field having a low intensity by forming the recording medium such that the intensity of the DC magnetic field in the first direction in which the CN ratio was 0 was 75 to 230 Oe, the intensity of the DC magnetic field in the second direction which was opposite to the first direction and in which the CN ratio was saturated was 20 to 180 Oe, and the difference between the noise level at which the CN ratio was 0 and the maximum noise level was 10 dB or less.

It is to be understood that the present invention is not limited to the above-described embodiments and may be applied in various forms. The present invention includes all such applications without departing from the spirit and scope defined by the appended claims.

## Claims

1. A magnetooptical recording medium comprising a substrate (1), a first magnetic layer (3) formed on said substrate and having an easy axis of magnetization in a direction perpendicular to a layer surface, a second magnetic layer (4) having a lower Curie temperature and a larger coercive force at room temperature than said first magnetic layer and exchange-coupled to said first magnetic layer, and a reflective layer (6) formed on a side opposite to said substrate with respect to said first and second magnetic layers,
characterized in that when said recording medium is evaluated by performing a process of recording a signal on said recording medium by scanning said recording medium by a light beam modulated in accordance with the signal while applying a DC magnetic field on said recording medium, reproducing the recorded signal by using a magneto-optic effect, and detecting a CN ratio and noise level of the reproduced signal, while changing a direction and intensity of the DC magnetic field, an intensity of the DC magnetic field in a first direction in which the CN ratio is O is 75 to 230 Oe, an intensity of the DC magnetic field in a second direction in which the CN ratio is saturated and which is opposite to the first direction is 20 to 180 Oe, and a difference between a noise level at which the CN ratio is 0 and a maximum noise level is not more than 10 dB.

2. A medium according to claim 1, characterized in that said first and second magnetic layers (3, 4) are composed of rare-earth element/transition metal amorphous alloys, a difference between a Curie temperature of said first magnetic layer (3) and that of said second magnetic layer (4) is 60 to 130°C, and saturation magnetization of said first magnetic layer at room temperature is transition metal sub-lattice magnetization superiority and 190 to 260 emu/cc.

3. A medium according to claim 1 or 2, characterized in that said first and second magnetic layers (3, 4) are composed of rare-earth element/transition metal amorphous alloys, and saturation magnetization of said first magnetic layer at room temperature is rare-earth metal sub-lattice magnetization superiority and not more than 100 emu/cc.

4. A medium according to any one of claims 1 to 3, characterized by further comprising a recording auxiliary layer (8) formed on an opposite side to said first magnetic layer (3) with respect to said second magnetic layer (4) and having a higher Curie temperature than said second magnetic layer and an easy axis of magnetization in a direction perpendicular to a layer surface.

5. A medium according to any one of claims 1 to 4, characterized by further comprising a first inorganic dielectric layer (2) formed between said substrate (1) and said first and second magnetic layers (3, 4), and a second inorganic dielectric layer (5) formed between said first and second magnetic layers (3, 4) and said reflective layer (6).

6. A method of recording data on said magnetooptical recording medium defined by any one of claims 1 to 5 by scanning said medium using a light beam having a constant intensity while applying a magnetic field modulated in accordance with the data.

7. A magnetooptical recording medium including at least two exchange-coupled magnetic layers each having an easy axis of magnetization perpendicular to the layers, wherein the layers are chosen such that data may be recorded on them using a radiation source of substantially constant intensity and a modulated magnetic field, the recording magnetic field intensity being in a range 20 to 180 0e.
